# EUROPÄISCHE PATENTSCHRIFT

(11) **EP 2 550 441 B1**
(45) Veröffentlichungstag und Bekanntmachung des Hinweises auf die Patenterteilung: **25.03.2020**
(21) Anmeldenummer: 11709938.2
(22) Anmeldetag: 21.03.2011
(51) Int. Cl.: F02D 29/04, F02D 41/02, F01N 3/023

(54) **VORRICHTUNG ZUR DURCHFÜHRUNG EINES REGENERATIONSVORGANGS IN EINEM RUßPARTIKELFILTER**
DEVICE FOR CARRYING OUT A REGENERATION PROCESS IN A SOOT PARTICLE FILTER
DISPOSITIF PERMETTANT DE METTRE EN OEUVRE UN PROCESSUS DE RÉGÉNÉRATION DANS UN FILTRE À PARTICULES DE SUIE

(30) Priorität: 23.03.2010 DE 102010003158
(43) Veröffentlichungstag der Anmeldung: 30.01.2013
(73) Patentinhaber: Deere & Company, Moline, IL 61265 (US)
(72) Erfinder: BACK, Peter, 68789 St. Leon-Rot (DE); WAHL, Markus, 37077 Göttingen (DE); LANG, Mattias, 76698 Ubstadt-Weiher (DE); NORDHOFF, Hendrik, 48329 Havixbeck (DE)
(74) Vertreter: Dehnhardt, Florian Christopher
(86) Internationale Anmeldenummer: PCT/EP2011/054245
(87) Internationale Veröffentlichungsnummer: WO 2011/117188

(56) Entgegenhaltungen:
- EP-A1- 1 553 267
- WO-A1-2009/060719
- JP-A- 2005 337 062
- JP-A- 2010 077 937

## Beschreibung

Die Erfindung betrifft eine Vorrichtung zur Durchführung eines Regenerationsvorgangs in einem Rußpartikelfilter, wobei dem Rußpartikelfilter ein Oxidationskatalysator zur Erhöhung der Temperatur eines von einem Dieselmotor zugeführten Abgasstroms vorgeschaltet ist.

Die von der Europäischen Union erlassenen Abgasnormen sehen eine schrittweise Reduzierung der von Dieselmotoren erzeugten und mit dem Motorabgas in die Umgebung ausgestoßenen Rußpartikel vor. Die Beschränkung des Rußpartikelausstoßes erfolgt durch Verwendung von Rußpartikelfiltern, in der Regel mit sogenannten Wandstromfiltern, bei denen der aus dem Dieselmotor austretende Abgasstrom eine poröse Filterwand aus einem keramischen oder metallischen Werkstoff durchdringt. Die im Abgasstrom mitgeführten Rußpartikel lagern sich hierbei sowohl auf der Oberfläche als auch im Inneren der Filterwand ab, sodass der Abgasgegendruck mit zunehmendem Zusetzungsgrad der Filterwand ansteigt. Zur Regeneration des Rußpartikelfilters werden daher in regelmäßigen Zeitabständen die abgelagerten Rußpartikel verbrannt, wozu die Temperatur des Abgasstroms insbesondere durch Verwendung eines dem Rußpartikelfilter vorgeschalteten Oxidationskatalysators zeitweise auf Temperaturen über 500 °C erhöht wird.

Die zum Betrieb eines derartigen Oxidationskatalysators erforderliche Anspringtemperatur liegt typischerweise in der Größenordnung von 250 bis 300 °C. Gerade unter Niedriglastbedingungen besteht daher die Möglichkeit, dass die Temperatur des von dem Dieselmotor zugeführten Abgasstroms die Anspringtemperatur des Oxidationskatalysators nicht ohne Weiteres erreicht. WO 2009/060719 A1 zeigt eine Anordnung, in der eine hydraulische Pumpe als Last zur Regeneration eines Partikelfilters eingesetzt wird.

Es ist daher Aufgabe der vorliegenden Erfindung, eine Vorrichtung der eingangs genannten Art dahingehend weiterzubilden, dass auch unter Niedriglastbedingungen eine zuverlässige Regeneration des Rußpartikelfilters gewährleistet ist.

Diese Aufgabe wird durch eine Vorrichtung zur Durchführung eines Regenerationsvorgangs in einem Rußpartikelfilter mit den Merkmalen des Patentanspruchs 1 gelöst, wobei dem Rußpartikelfilter ein Oxidationskatalysator zur Erhöhung der Temperatur eines von einem Dieselmotor zugeführten Abgasstroms vorgeschaltet ist. Erfindungsgemäß wird einem mittels des Dieselmotors betriebenen Hydraulikkreislauf eine parasitäre Last zugeschaltet, wenn sich ergibt, dass ein auf eine Regeneration des Rußpartikelfilters hinweisendes Auslösekriterium erfüllt ist.

Durch entsprechende Vorgabe der parasitären Last kann die Verlustleistung des Dieselmotors und damit die Temperatur des von dem Dieselmotor zugeführten Abgasstroms selbst unter Niedriglastbedingungen soweit erhöht werden, dass die Temperatur des von dem Dieselmotor zugeführten Abgasstroms die Anspringtemperatur des Oxidationskatalysators zuverlässig erreicht.

Das Auslösekriterium ist beispielsweise dann erfüllt, wenn sich durch Auswertung der Daten einer in einem Motorsteuergerät implementierten Zeitablaufsteuerung ergibt, dass ein Regenerationsvorgang des Rußpartikelfilters unmittelbar bevorsteht. Vorteilhafte Weiterbildungen der erfindungsgemäßen Vorrichtung gehen aus den Unteransprüchen hervor.

Die parasitäre Last umfasst ein in einem hydraulischen Nebenkreislauf angeordnetes Druckbegrenzungsventil. Das Druckbegrenzungsventil nimmt bei Überschreiten eines eingangsseitig anliegenden Grenzdrucks selbsttätig eine durchlässige Ventilstellung ein. Mit anderen Worten wird bei Erfüllung des Auslösekriteriums ein Teil des durch den Hydraulikkreislauf fließenden Volumenstroms in den hydraulischen Nebenkreislauf abgezweigt, wobei die zum Öffnen des Druckbegrenzungsventils erforderliche hydraulische Energie zu einer erhöhten Auslastung des Dieselmotors und damit zu einer dementsprechenden Erhöhung der Temperatur des Abgasstroms führt.

Hierbei besteht die Möglichkeit, dass das Druckbegrenzungsventil bezüglich seines Grenzdrucks einstellbar ist, wobei die Einstellung des Grenzdrucks des Druckbegrenzungsventils insbesondere nach Maßgabe einer auf eine momentane Auslastung des Dieselmotors hinweisenden Belastungskenngröße erfolgt. Die Belastungskenngröße wird beispielsweise durch Auswertung der seitens eines Motorsteuergeräts bereitgestellten Drehzahldaten ermittelt. Die Drehzahldaten lassen zumindest einen mittelbaren Rückschluss auf die momentane Temperatur des Abgasstroms zu.

Zusätzlich oder alternativ kann die Erfassung der momentanen Temperatur des Abgasstroms auch unmittelbar durch Verwendung eines im Abgasstrom stromaufwärts des Oxidationskatalysators angeordneten Temperatursensors erfolgen. Die seitens des Temperatursensors bereitgestellten Sensordaten bilden hierbei die Grundlage für die Ermittlung einer entsprechenden Temperaturgröße, nach deren Maßgabe dann die Einstellung des Grenzdrucks des Druckbegrenzungsventils erfolgt.

Die durch die ermittelte Belastungskenngröße und/oder die ermittelte Temperaturgröße wiedergegebene momentane Temperatur des Abgasstroms kann insbesondere zur Bestimmung einer gegenüber der Anspringtemperatur des Oxidationskatalysators gegebenenfalls auszugleichenden Temperaturdifferenz herangezogen werden. Ergibt sich, dass die Temperaturdifferenz einen vorgegebenen Schwellenwert überschreitet, so wird der Grenzdruck des Druckbegrenzungsventils und damit die Verlustleistung des Dieselmotors derart erhöht, dass die Temperatur des Abgasstroms noch vor Einsetzen des Regenerationsvorgangs die erforderliche Anspringtemperatur des Oxidationskatalysators erreicht.

Ferner ist es denkbar, bei der Einstellung des Grenzdrucks des Druckbegrenzungsventils neben der durch die ermittelte Belastungskenngröße und/oder die ermittelte Temperaturgröße wiedergegebenen momentanen Temperatur des Abgasstroms deren zeitliche Änderung zu berücksichtigen, sodass in gewissem Umfang eine Vorhersage der zur Erreichung der Anspringtemperatur des Oxidationskatalysators erforderlichen parasitären Last im hydraulischen Nebenkreislauf möglich ist.

Die Zuschaltung der parasitären Last erfolgt hierbei mittels eines in dem hydraulischen Nebenkreislauf angeordneten Drucksteuerventils. erfolgen. Das Drucksteuerventil ist insbesondere als elektrisch betätigbares 2/2-Wegeventil ausgebildet, wobei dieses bei Erfüllung des Auslösekriteriums in eine durchlässige Ventilstellung verbracht wird.

Der vorzugsweise geschlossen ausgebildete Hydraulikkreislauf wird mittels einer aus einem Hydraulikreservoir gespeisten und seitens des Dieselmotors angetriebenen Verstellpumpe betrieben, wobei ein Steuereingang der Verstellpumpe mit einem zwischen dem Drucksteuerventil und dem Druckbegrenzungsventil verlaufenden Abschnitt des hydraulischen Nebenkreislaufs in Verbindung steht. Der in diesem Fall beim Zuschalten der parasitären Last am Steuereingang auftretende Druckabfall veranlasst die Verstellpumpe zur Förderung eines erhöhten Volumenstroms, sodass ein rascher Aufbau des zum Öffnen des Druckbegrenzungsventils erforderlichen Grenzdrucks im hydraulischen Nebenkreislauf gewährleistet ist.

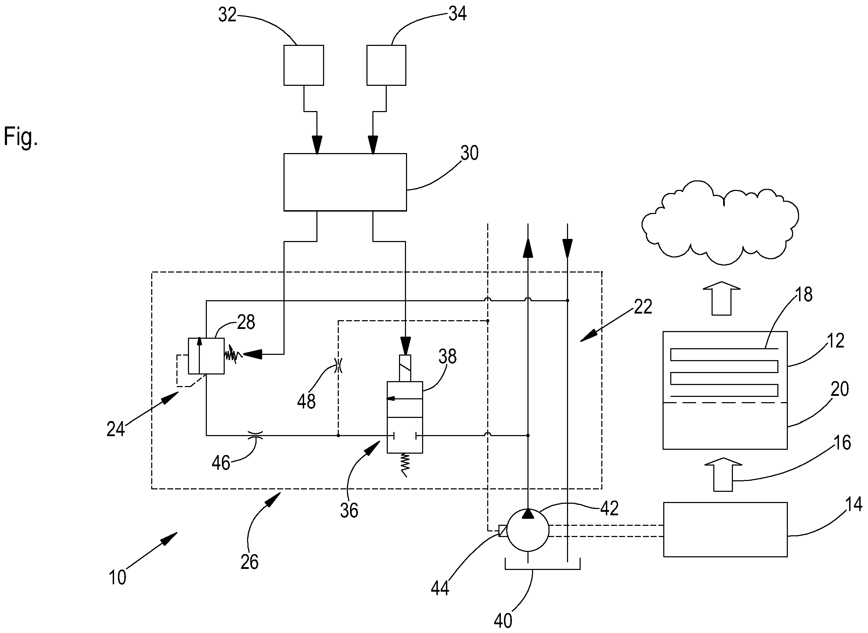

Die erfindungsgemäße Vorrichtung wird im Folgenden anhand der beigefügten Zeichnung näher erläutert.

Die einzige Figur zeigt ein schematisch dargestelltes Ausführungsbeispiel der erfindungsgemäßen Vorrichtung zur Durchführung eines Regenerationsvorgangs in einem Rußpartikelfilter.

Der von der erfindungsgemäßen Vorrichtung 10 umfasste und in einem Motorraum eines landwirtschaftlichen oder industriellen Nutzfahrzeugs untergebrachte Rußpartikelfilter 12 ist im vorliegenden Fall als herkömmlicher Wandstromfilter ausgebildet, bei dem ein von einem Dieselmotor 14 erzeugter Abgasstrom 16 eine poröse Filterwand 18 aus einem keramischen oder metallischen Werkstoff durchdringt. Die im Abgasstrom 16 mitgeführten Rußpartikel lagern sich hierbei sowohl auf der Oberfläche als auch im Inneren der Filterwand 18 des Rußpartikelfilters 12 ab. Da der Abgasgegendruck mit zunehmendem Zusetzungsgrad der Filterwand 18 ansteigt, werden die abgelagerten Rußpartikel zur Regeneration des Rußpartikelfilters 12 in regelmäßigen Zeitabständen verbrannt, wozu die Temperatur des Abgasstroms 16 durch Verwendung eines dem Rußpartikelfilter 12 vorgeschalteten Oxidationskatalysators 20 zeitweise auf Temperaturen über 500 °C erhöht wird.

Die zum Betrieb des Oxidationskatalysators 20 erforderliche Anspringtemperatur liegt typischerweise in der Größenordnung von 250 bis 300 °C. Da gerade unter Niedriglastbedingungen die Möglichkeit besteht, dass die Temperatur des Abgasstroms 16 die Anspringtemperatur des Oxidationskatalysators 20 nicht ohne Weiteres erreicht, wird einem mittels des Dieselmotors 14 betriebenen Hydraulikkreislauf 22 eine parasitäre Last 24 zugeschaltet, wenn sich ergibt, dass ein auf eine Regeneration des Rußpartikelfilters 12 hinweisendes Auslösekriterium erfüllt ist.

Die parasitäre Last 24 umfasst ein in einem hydraulischen Nebenkreislauf 26 angeordnetes Druckbegrenzungsventil 28, das bei Überschreiten eines eingangsseitig anliegenden Grenzdrucks selbsttätig eine durchlässige Ventilstellung einnimmt. Das Druckbegrenzungsventil 28 ist bezüglich seines Grenzdrucks einstellbar, wobei die Einstellung des Grenzdrucks mittels einer Steuereinheit 30 nach Maßgabe einer auf eine momentane Auslastung des Dieselmotors 14 hinweisenden Belastungskenngröße erfolgt.

Die Belastungskenngröße wird von der Steuereinheit 30 durch Auswertung der von einem Motorsteuergerät 32 bereitgestellten Drehzahldaten ermittelt. Die Drehzahldaten lassen hierbei zumindest einen mittelbaren Rückschluss auf die momentane Temperatur des Abgasstroms 16 zu.

Zusätzlich oder alternativ erfolgt die Erfassung der momentanen Temperatur des Abgasstroms 16 unmittelbar durch Verwendung eines im Abgasstrom 16 stromaufwärts des Oxydationskatalysators 20 angeordneten Temperatursensors 34. Die seitens des Temperatursensors 34 bereitgestellten Sensordaten bilden die Grundlage für die Ermittlung einer entsprechenden Temperaturgröße, nach deren Maßgabe die Steuereinheit 30 dann den Grenzdruck des Druckbegrenzungsventils 28 einstellt.

Die durch die Belastungskenngröße und/oder die Temperaturgröße wiedergegebene momentane Temperatur des Abgasstroms 16 wird von der Steuereinheit 30 zur Bestimmung einer gegenüber der Anspringtemperatur des Oxidationskatalysators 20 gegebenenfalls auszugleichenden Temperaturdifferenz herangezogen. Stellt die Steuereinheit 30 fest, dass die Temperaturdifferenz einen vorgegebenen Schwellenwert überschreitet, so erhöht diese den Grenzdruck des Druckbegrenzungsventils 28 und damit die Verlustleistung des Dieselmotors 14 derart, dass die Temperatur des Abgasstroms 16 noch vor Einsetzen des Regenerationsvorgangs die erforderliche Anspringtemperatur des Oxidationskatalysators 20 erreicht.

Hierbei berücksichtigt die Steuereinheit 30 bei der Einstellung des Grenzdrucks des Druckbegrenzungsventils 28 neben der durch die Belastungskenngröße und/oder die Temperaturgröße wiedergegebenen momentanen Temperatur des Abgasstroms 16 ferner deren zeitliche Änderung, sodass in gewissem Umfang eine Vorhersage der zur Erreichung der Anspringtemperatur des Oxidationskatalysators 20 erforderlichen parasitären Last 24 im hydraulischen Nebenkreislauf 26 möglich ist.

Die Zuschaltung des Druckbegrenzungsventils 28 und damit der parasitären Last 24 erfolgt mittels eines in dem hydraulischen Nebenkreislauf 26 angeordneten Drucksteuerventils 36. Das Drucksteuerventil 36 ist als elektrisch betätigbares 2/2-Wegeventil 38 ausgebildet, wobei dieses von der Steuereinheit 30 bei Erfüllung des Auslösekriteriums in eine durchlässige Ventilstellung verbracht wird. Das Auslösekriterium ist im vorliegenden Fall dann erfüllt, wenn die Steuereinheit 30 durch Auswertung der Daten einer in dem Motorsteuergerät 32 implementierten Zeitablaufsteuerung feststellt, dass ein Regenerationsvorgang des Rußpartikelfilters 12 unmittelbar bevorsteht.

Mit anderen Worten wird bei Erfüllung des Auslösekriteriums ein Teil des durch den Hydraulikkreislauf 22 fließenden Volumenstroms in den hydraulischen Nebenkreislauf 26 abgezweigt, wobei die zum Öffnen des Druckbegrenzungsventils 28 erforderliche hydraulische Energie zu einer erhöhten Auslastung des Dieselmotors 14 und damit zu einer dementsprechenden Erhöhung der Temperatur des Abgasstroms 16 führt.

Der im vorliegenden Fall geschlossen ausgebildete Hydraulickreislauf 22 wird mittels einer aus einem Hydraulikreservoir 40 gespeisten und seitens des Dieselmotors 14 angetriebenen Verstellpumpe 42 betrieben. Ein Steuereingang 44 der Verstellpumpe 42 steht mit einem zwischen dem Drucksteuerventil 36 und dem Druckbegrenzungsventil 28 verlaufenden Abschnitt des hydraulischen Nebenkreislaufs 26 in Verbindung. Der in diesem Fall beim Zuschalten der parasitären Last 24 am Steuereingang 44 auftretende Druckabfall veranlasst die Verstellpumpe 42 zur Förderung eines erhöhten Volumenstroms, sodass ein rascher Aufbau des zum Öffnen des Druckbegrenzungsventils 28 erforderlichen Grenzdrucks im hydraulischen Nebenkreislauf 26 gewährleistet ist. Mehrere Drosselelemente 46 und 48 stellen hierbei die Ausbildung stabiler Druckverhältnisse im Hydraulikkreislauf 22 bzw. im hydraulischen Nebenkreislauf 26 sicher.

## Patentansprüche

1. Vorrichtung zur Durchführung eines Regenerationsvorgangs in einem Rußpartikelfilter, mit einem Dieselmotor (14), einem Rußpartikelfilter (12), einem dem Rußpartikelfilter (12) vorgeschalteten Oxydationskatalysator (20) zur Erhöhung der Temperatur eines von dem Dieselmotor (14) zugeführten Abgasstroms, einem mittels des Dieselmotors (14) betriebenen Hydraulikkreislauf (22), einer parasitären Last (24) mit einem in einem hydraulischen Nebenkreislauf (26) angeordneten Druckbegrenzungsventil (28), einem in dem hydraulischen Nebenkreislauf (26) angeordneten Drucksteuerventil (36), einem Hydraulikreservoir (40), einer aus dem Hydraulikreservoir (40) gespeisten Verstellpumpe (42), und einer Steuereinheit (30), wobei die Steuereinheit (30) dem Hydraulickreislauf (22) die parasitäre Last (24) zuschaltet, wenn sich ergibt, dass ein auf eine Regeneration des Rußpartikelfilters (12) hinweisendes Auslösekriterium erfüllt ist, wobei die Zuschaltung der parasitären Last (24) mittels des Drucksteuerventils (36) erfolgt, wobei der Betrieb des Hydraulikkreislaufs (22) mittels der Verstellpumpe (42) erfolgt, wobei ein Steuereingang (44) der Verstellpumpe (42) mit einem zwischen dem Drucksteuerventil (36) und dem Druckbegrenzungsventil (28) verlaufenden Abschnitt des hydraulischen Nebenkreislaufs (26) in Verbindung steht.

2. Vorrichtung nach Anspruch 1, **dadurch gekennzeichnet, dass** das Druckbegrenzungsventil (28) bezüglich seines Grenzdrucks einstellbar ist, wobei die Einstellung des Grenzdrucks nach Maßgabe einer auf eine momentane Auslastung des Dieselmotors (14) hinweisenden Belastungskenngröße und/oder einer auf eine momentane Temperatur des Abgasstroms (16) hinweisenden Temperaturgröße erfolgt.

3. Kraftfahrzeug, insbesondere landwirtschaftliches oder industrielles Nutzfahrzeug, mit einer Vorrichtung (10) zur Durchführung eines Regenerationsvorgangs in einem Rußpartikelfilter (12) nach einem der Ansprüche 1 oder 2.

## Claims

1. Apparatus for carrying out a regeneration operation in a soot particulate filter, having a diesel engine (14), a soot particulate filter (12), an oxidation catalytic converter (20) which is connected upstream of the soot particulate filter (12) for increasing the temperature of an exhaust gas stream which is fed in from the diesel engine (14), a hydraulic circuit (22) which is operated by means of the diesel engine (14), a parasitic load (24) with a pressure limiting valve (28) which is arranged in a hydraulic auxiliary circuit (26), a pressure control valve (36) which is arranged in the hydraulic auxiliary circuit (26), a hydraulic reservoir (40), a variable displacement pump (42) which is fed from the hydraulic reservoir (40), and a control unit (30), the control unit (30) switching the parasitic load (24) into the hydraulic circuit (22) when it arises that a triggering criterion which indicates a regeneration of the soot particulate filter (12) is fulfilled, the switching in of the parasitic load (24) taking place by means of the pressure control valve (36), the operation of the hydraulic circuit (22) taking place by means of the variable displacement pump (42), a control input (44) of the variable displacement pump (42) being connected to ,a section of the hydraulic auxiliary circuit (26), which section runs between the pressure control valve (36) and the pressure limiting valve (28).

2. Apparatus according to Claim 1, **characterized in that** the pressure limiting valve (28) is adjustable with regard to its limit pressure, the adjustment of the limit pressure taking place in accordance with a load parameter which indicates an instantaneous load of the diesel engine (14) and/or a temperature variable which indicates an instantaneous temperature of the exhaust gas stream (16) .

3. Motor vehicle, in particular agricultural or industrial commercial vehicle, having an apparatus (10) for carrying out a regeneration operation in a soot particulate filter (12) according to either of Claims 1 and 2.

## Revendications

1. Dispositif de mise en œuvre d'un processus de régénération dans un filtre à particules de suie, le dispositif comprenant un moteur diesel (14), un filtre à particules de suie (12), un catalyseur d'oxydation (20) monté en amont du filtre à particules de suie (12) et destiné à augmenter la température d'un flux de gaz d'échappement provenant du moteur diesel (14), un circuit hydraulique (22) exploité au moyen du moteur diesel (14), une charge parasite (24) pourvue d'une soupape de limitation de pression (28) disposée dans un circuit hydraulique secondaire (26), une soupape de commande de pression (36) disposée dans le circuit hydraulique secondaire (26), un réservoir hydraulique (40), une pompe à cylindrée variable (42) alimentée par le réservoir hydraulique (40) et une unité de commande (30), l'unité de commande (30) commutant la charge parasite (24) sur le circuit hydraulique (22) s'il apparaît qu'un critère de déclenchement indiquant une régénération du filtre à particules de suie (12) a été respecté, la commutation de la charge parasite (24) étant effectuée au moyen de la soupape de commande de pression (36), l'exploitation du circuit hydraulique (22) se faisant au moyen de la pompe à cylindrée variable (42), une entrée de commande (44) de la pompe à cylindrée variable (42) étant reliée à une portion du circuit hydraulique secondaire (26), laquelle s'étend entre la soupape de commande de pression (36) et la soupape de limitation de pression (28).

2. Dispositif selon la revendication 1, **caractérisé en ce que** la pression limite de la soupape de limitation de pression (28) est réglable, le réglage de la pression limite étant effectué conformément à un paramètre de charge indiquant une charge instantanée du moteur diesel (14) et/ou un paramètre de température indiquant une température instantanée du flux de gaz d'échappement (16) .

3. Véhicule automobile, notamment véhicule utilitaire agricole ou industriel, comprenant un dispositif (10) destiné à mettre en œuvre un processus de régénération dans un filtre à particules de suie (12) selon l'une des revendications 1 et 2.
